(19) Europäisches Patentamt
European Patent Office
Office européen des brevets

(11) EP 3 238 937 B1

(12) **EUROPEAN PATENT SPECIFICATION**

(45) Date of publication and mention of the grant of the patent:
**14.08.2019 Bulletin 2019/33**

(21) Application number: **15872664.6**

(22) Date of filing: **03.12.2015**

(51) Int Cl.:
***B32B 27/28*** *(2006.01)* ***B32B 1/08*** *(2006.01)*
***B32B 27/08*** *(2006.01)* ***B32B 27/34*** *(2006.01)*
***C08G 69/26*** *(2006.01)* ***C08L 23/08*** *(2006.01)*
***C08L 77/06*** *(2006.01)* ***F16L 11/04*** *(2006.01)*
***B32B 3/28*** *(2006.01)* ***B32B 7/12*** *(2006.01)*
***B32B 27/18*** *(2006.01)* ***B32B 27/20*** *(2006.01)*
***B32B 27/22*** *(2006.01)* ***B32B 27/32*** *(2006.01)*
***B32B 27/30*** *(2006.01)* ***B32B 27/36*** *(2006.01)*

(86) International application number:
**PCT/JP2015/084004**

(87) International publication number:
**WO 2016/104095 (30.06.2016 Gazette 2016/26)**

(54) **MULTILAYER HOLLOW MOLDED BODY**

MEHRSCHICHTIGER HOHLER FORMKÖRPER

CORPS MOULÉ CREUX MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.12.2014 JP 2014263883**

(43) Date of publication of application:
**01.11.2017 Bulletin 2017/44**

(73) Proprietor: **Mitsubishi Gas Chemical Company, Inc.**
**Tokyo 100-8324 (JP)**

(72) Inventors:
- **SATO, Kazuya**
  **Hiratsuka-shi**
  **Kanagawa 254-0016 (JP)**
- **KATO, Tomonori**
  **Hiratsuka-shi**
  **Kanagawa 254-0016 (JP)**
- **KIKUCHI, Mayumi**
  **Hiratsuka-shi**
  **Kanagawa 254-0016 (JP)**

(74) Representative: **Vossius & Partner**
**Patentanwälte Rechtsanwälte mbB**
**Siebertstrasse 3**
**81675 München (DE)**

(56) References cited:
**EP-A1- 1 741 553** **EP-A1- 1 884 356**
**FR-A1- 2 928 152** **JP-A- H01 242 245**
**JP-A- H09 504 748** **JP-A- 2002 254 581**
**JP-A- 2003 239 819** **JP-A- 2006 044 201**
**JP-A- 2013 518 175** **JP-A- 2014 240 145**
**JP-A- 2014 240 147** **US-A1- 2011 190 433**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

TECHNICAL FIELD

The present invention relates to a multilayer hollow molded body, and more specifically to a multilayer hollow molded body that can be preferably used as a fuel transportation piping material for transporting high-temperature liquid fuel, etc.

BACKGROUND ART

Conventionally, a multilayer tube prepared by laminating a layer consisting of an ethylene-vinylalcohol copolymer (EVOH) on a layer consisting of an aliphatic polyamide such as polyamide 11 and polyamide 12, which is used as a laminated body excellent in terms of barrier properties against liquid fuel such as petroleum, has been proposed (JP Patent Publication (Kokai) No. 2003-239819 A (Patent Literature 1) and JP Patent Publication (Kokai) No. 2006-341615 A (Patent Literature 2)).

However, although EVOH is a material extremely excellent in terms of barrier properties, it is disadvantageous in that it has low burst resistance and low heat resistance. Accordingly, when such EVOH has been used as a fuel transportation piping material for transporting high-temperature liquid fuel, which has been required to have high pressure resistance and high heat resistance, there have been cases where burst resistance and heat resistance have been insufficient.

CITATION LIST

Patent Literature

Patent Literature 1: JP Patent Publication (Kokai) No. 2003-239819 A
Patent Literature 2: JP Patent Publication (Kokai) No. 2006-341615 A
Patent Litertaure 3: FR 2928152A1 disclosing a multilayer hollow molded body

SUMMARY OF INVENTION

Technical Problem

Under such circumstances, it has been desired to provide a multilayer hollow molded body, which has sufficiently high barrier properties, burst resistance and heat resistance, is also excellent in terms of impact resistance, and can be preferably used as a fuel transportation piping material for transporting high-temperature liquid fuel, etc. Solution to Problem

As a result of intensive studies in view of the aforementioned problem, the present inventors have found that, in a multilayer hollow molded body having a layer consisting of an aliphatic polyamide and a barrier layer, a semi-aromatic polyamide is blended with EVOH and the mixture is used as a barrier layer, the burst resistance and heat resistance of the multilayer hollow molded body can be improved, while the barrier properties thereof are maintained at a level comparable to those of conventional products, thereby completing the present invention. The multilayer hollow molded body of the present invention is also excellent in terms of impact resistance, and can also be preferably used as fuel transportation piping material for transporting high-temperature liquid fuel.

Specifically, the present invention relates to the following multilayer hollow molded body.

[1] A multilayer hollow molded body having at least one aliphatic polyamide layer (A) and at least one barrier layer (B), wherein
the aliphatic polyamide layer (A) consists of a resin composition comprising an aliphatic polyamide (a) as a main component, and
the barrier layer (B) consists of a resin composition comprising an ethylene-vinylalcohol copolymer (EVOH) and a semi-aromatic polyamide (b), wherein the mass ratio between the ethylene-vinylalcohol copolymer (EVOH) and the semi-aromatic polyamide (b) (EVOH : semi-aromatic polyamide (b)) in the resin composition constituting the barrier layer (B) is in the range of 60 : 40 to 30 : 70.

[2] The multilayer hollow molded body according to the above [1], wherein the semi-aromatic polyamide (b) is a polyamide comprising diamine constituting units containing 70 mol % or more of diamine constituting units derived

from xylylenediamine, and dicarboxylic acid units containing 70 mol % or more of dicarboxylic acid units derived from $\alpha,\omega$-straight chain aliphatic dicarboxylic acid having 4 to 8 carbon atoms.

[3] The multilayer hollow molded body according to the above [1] or [2], wherein the semi-aromatic polyamide (b) is polyxylyleneadipamide.

[4] The multilayer hollow molded body according to any one of the above [1] to [3], wherein the aliphatic polyamide (a) is at least one selected from the group consisting of: a polyamide (a1) comprising at least one of, lactam-derived constituting units having 10 to 12 carbon atoms and aminocarboxylic acid-derived constituting units having 10 to 12 carbon atoms; and a polyamide (a2) comprising aliphatic diamine-derived constituting units having 6 to 12 carbon atoms and aliphatic dicarboxylic acid-derived constituting units having 10 to 12 carbon atoms.

[5] The multilayer hollow molded body according to any one of the above [1] to [4], wherein the aliphatic polyamide (a) is at least one selected from the group consisting of polyamide 11, polyamide 12, polyamide 10,10, polyamide 10,12, polyamide 6,11 and polyamide 6,12.

[6] Use of the multilayer hollow molded body according to any one of the above [1] to [5], as a fuel tube, a fuel pipe, a fuel hose, or a connector.

ADVANTAGEOUS EFFECTS OF INVENTION

According to a preferred aspect of the present invention, a multilayer hollow laminated body, which is excellent in terms of barrier properties, burst resistance, heat resistance and impact resistance, can be obtained. The multilayer hollow molded body of the present invention can be preferably used as a fuel transportation piping material for transporting high-temperature liquid fuel such as petroleum, alcohol-containing gasoline, methanol, ethanol, light oil, kerosene, or heavy oil.

DESCRIPTION OF EMBODIMENTS

Hereinafter, a preferred embodiment of the multilayer hollow molded body of the present invention will be specifically described.

The multilayer hollow molded body of the present invention is characterized in that it has at least one aliphatic polyamide layer (A) and at least one barrier layer (B), wherein the aliphatic polyamide layer (A) consists of a resin composition comprising an aliphatic polyamide (a) as a main component, and the barrier layer (B) consists of a resin composition comprising an ethylene-vinylalcohol copolymer (EVOH) and a semi-aromatic polyamide (b).

In the present invention, by using, as a material for the barrier layer (B), a resin composition comprising an ethylene-vinylalcohol copolymer (EVOH) and a semi-aromatic polyamide (b), burst resistance and heat resistance that are sufficient for use as a fuel transportation piping material, as well as barrier properties, can be imparted to the barrier layer (B), when it is used in combination with the aliphatic polyamide layer (A). Moreover, good impact resistance can also be obtained. Hereinafter, an aliphatic polyamide layer (A) and a barrier layer (B), which constitute the multilayer hollow molded body of the present invention, and a method for producing a multilayer hollow molded body, etc. will be described.

(1) Aliphatic polyamide layer (A)

The aliphatic polyamide layer (A) used in the present invention is a layer consisting of a resin composition comprising an aliphatic polyamide (a) as a main component. Herein, the description "comprising an aliphatic polyamide (a) as a main component" is used to mean that the aliphatic polyamide (a) is comprised in the resin composition, at a mass ratio of 70% or more, preferably 75% or more, and more preferably 80% or more. By allowing the aliphatic polyamide layer to comprise the aliphatic polyamide (a) in the above-described range, chemical resistance and flexibility can be improved.

The aliphatic polyamide (a) used in the present invention is not particularly limited, as long as it is an essentially chain polyamide comprising, as a main component, constituting units which comprise an amide bond {-NH-C(=O)-} and do not comprise an aromatic ring in the molecular skeleton thereof. Herein, the description "comprising, as a main component" is used to mean that constituting units not comprising an aromatic ring account for 60 mol % or more, preferably 80 to 100 mol %, and more preferably 90 to 100 mol %, of all constituting units in the aliphatic polyamide (a). Among such polyamides, the aliphatic polyamide (a) is preferably one or two or more selected from the group consisting of: a polyamide (a1) comprising at least one of, lactam-derived constituting units having 10 to 12 carbon atoms and aminocarboxylic acid-derived constituting units having 10 to 12 carbon atoms; and a polyamide (a2) comprising aliphatic diamine-derived constituting units having 6 to 12 carbon atoms and aliphatic dicarboxylic acid-derived constituting units having 10 to 12 carbon atoms, because the chemical resistance of the multilayer hollow molded body of the present invention can be further improved by such an aliphatic polyamide (a).

[Polyamide (a1)]

The polyamide (a1) comprises at least one of lactam-derived constituting units having 10 to 12 carbon atoms and aminocarboxylic acid-derived constituting units having 10 to 12 carbon atoms.

The number of carbon atoms contained in such lactam-derived constituting units and aminocarboxylic acid-derived constituting units is preferably 11 or 12, from the viewpoint of flexibility, easy availability and the like.

The lactam-derived constituting unit having 10 to 12 carbon atoms and the aminocarboxylic acid-derived constituting unit having 10 to 12 carbon atoms generally consist of a ω-aminocarboxylic acid unit represented by the following general formula:

[Formula 1]

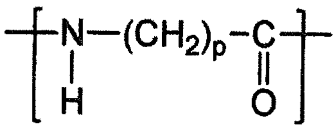

wherein, in the above formula, p represents an integer of 9 to 11, and preferably 10 or 11.

Specific examples of a compound constituting the lactam-derived constituting unit having 10 to 12 carbon atoms include decanelactam, undecanelactam, and dodecanelactam. On the other hand, specific examples of a compound constituting the aminocarboxylic acid-derived constituting unit having 10 to 12 carbon atoms include 10-aminodecanoic acid, 11-aminoundecanoic acid, and 12-aminododecanoic acid.

The polyamide (a1) is not limited to a polyamide (a1) consisting of only constituting units derived from lactam having 10 to 12 carbon atoms and aminocarboxylic acid having 10 to 12 carbon atoms, as long as it comprises, as a main component, these constituting units. It is to be noted that the expression "as a main component" is used herein to mean that other constituting units may also be comprised, unless such other constituting units impair the effects of the present invention. Thus, at least one of the lactam constituting units having 10 to 12 carbon atoms and the aminocarboxylic acid-derived constituting units having 10 to 12 carbon atoms, as monomers, accounts for, for example, 60 mol % or more, preferably 80 to 100 mol %, and more preferably 90 to 100 mol %, of all constituting units in the polyamide (a1), although it is not particularly limited thereto.

Examples of other constituting units in the polyamide (a1) include lactams other than the lactam having 10 to 12 carbon atoms, aminocarboxylic acids other than the aminocarboxylic acid having 10 to 12 carbon atoms, and constituting units derived from nylon salts consisting of diamine and dicarboxylic acid.

Examples of such lactams other than the lactam having 10 to 12 carbon atoms include lactams having a 3- or more-membered ring. Specific examples include ε-caprolactam, ω-enantholactam, α-pyrrolidone, and α-piperidone. Examples of the aminocarboxylic acid include 6-aminocaproic acid, 7-aminoheptanoic acid, and 9-aminononanoic acid.

Examples of the diamine constituting nylon salts include: aliphatic diamines such as ethylenediamine, propylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine, 2-methyl-1,5-pentanediamine, 3-methyl-1,5-pentanediamine, 2-methyl-1,8-octanediamine, and 2,2,4- or 2,4,4-trimethylhexanediamine; alicyclic diamines such as 1,3- or 1,4-cyclohexanediamine, 1,3- or 1,4-bis(aminomethyl)cyclohexane, bis(4-aminocyclohexyl)methane, 2,2-bis(4-aminocyclohexyl)propane, bis(3-methyl-4-aminocyclohexyl)methane, 2,2-bis(3-methyl-4-aminocyclohexyl)propane, 5-amino-2,2,4-trimethylcyclopentanemethanamine, 5-amino-1,3,3-trimethylcyclohexanemethanamine, bis(aminopropyl)piperazine, bis(aminoethyl)piperazine, norbomanedimethylamine, and tricyclodecanedimethylamine; and diamines having an aromatic ring, such as p-xylylenediamine and m-xylylenediamine.

Examples of the dicarboxylic acid constituting nylon salts include: aliphatic dicarboxylic acids such as adipic acid, pimelic acid, suberic acid, azelaic acid, sebacic acid, 1,9-nonanedicarboxylic acid, 1,10-decanedicarboxylic acid, 1,11-undecanedicarboxylic acid, and 1,12-dodecanedicarboxylic acid; alicyclic dicarboxylic acids such as 1,3- or 1,4-cyclohexanedicarboxylic acid, dicyclohexanemethane-4,4'-dicarboxylic acid, and norbornanedicarboxylic acid; and aromatic dicarboxylic acids such as isophthalic acid, terephthalic acid, and 1,4-, 2,6- or 2,7-naphthalenedicarboxylic acid.

The polyamide (a1) is preferably polyamide 11 comprising at least one of undecanelactam-derived constituting units and 11-aminoundecanoic acid-derived constituting units as a main component, or polyamide 12 comprising at least one of dodecanelactam-derived constituting units and 12-aminododecanoic acid-derived constituting units as a main

component, or a mixture of the polyamide 11 and the polyamide 12.

The polyamide (a1) can be obtained by polymerizing the above-described constituting monomers. That is, the polyamide (a1) is obtained by subjecting lactam to ring-opening polymerization or by subjecting aminocarboxylic acid to polycondensation.

The polymerization method is not particularly limited, and a known method such as melt polymerization, solution polymerization or solid phase polymerization can be adopted. These polymerization methods can be used alone, or by appropriately combining them. As a production apparatus, a known polyamide production apparatus, such as a batch-type reaction tank, a single-tank or multi-tank continuous reactor, a tubular continuous reactor, uniaxial kneading extruder, or a biaxial kneading extruder, can be used.

Upon the polycondensation of the polyamide (a1), a small amount of monoamine, monocarboxylic acid, etc. may be added as a molecular weight adjuster.

Moreover, upon the polycondensation of the polyamide (a1), in order to obtain the effect of promoting an amidation reaction or the effect of preventing coloration during the polycondensation, known additives such as a phosphorus atom-containing compound, an alkaline metal compound and an alkaline-earth metal compound may be added.

From the viewpoint of heat resistance and melt moldability, the melting point Tm of the polyamide (a1) is preferably 160°C to 240°C, more preferably 165°C to 230°C, and further preferably 170°C to 220°C.

It is to be noted that, in the present description, the melting point is measured by performing DSC measurement (differential scanning calorimetry) using a differential scanning calorimeter [manufactured by Shimadzu Corporation, trade name: DSC-60], at a temperature increase rate of 10°C/min under a nitrogen current.

[Polyamide (a2)]

The polyamide (a2) comprises aliphatic diamine-derived constituting units having 6 to 12 carbon atoms and aliphatic dicarboxylic acid-derived constituting units having 10 to 12 carbon atoms.

The compound capable of constituting the diamine unit of the polyamide (a2) is an aliphatic diamine having 6 to 12 carbon atoms. The aliphatic group in the aliphatic diamine having 6 to 12 carbon atoms is a linear or branched divalent aliphatic hydrocarbon group, which may be either a saturated aliphatic group or an unsaturated aliphatic group. In general, it is a linear saturated aliphatic group. The number of carbon atoms contained in the aliphatic group is preferably 8 to 12, more preferably 9 to 12, and further preferably 10 to 12.

Examples of the compound capable of constituting the diamine unit of the polyamide (a2) include aliphatic diamines such as hexamethylenediamine, heptamethylenediamine, octamethylenediamine, nonamethylenediamine, decamethylenediamine, undecamethylenediamine, and dodecamethylenediamine, but are not limited thereto. These compounds can be used alone, or in combination of two or more types.

From the viewpoint of flexibility and the like, the diamine units in the polyamide (a2) comprise aliphatic diamine-derived constituting units having 6 to 12 carbon atoms in an amount of preferably 70 mol % or more, more preferably 80 to 100 mol %, and further preferably 90 to 100 mol %.

The diamine units in the polyamide (a2) may consist of only the aliphatic diamine-derived constituting units having 6 to 12 carbon atoms, but the diamine units may also comprise constituting units derived from diamines other than the aliphatic diamine having 6 to 12 carbon atoms.

Examples of diamines other than the aliphatic diamine having 6 to 12 carbon atoms, which are comprised in the polyamide (a2), include: aliphatic diamines such as ethylenediamine, propylenediamine, tetramethylenediamine, and pentamethylenediamine; alicyclic diamines such as 1,3- or 1,4-bis(aminomethyl)cyclohexane, 1,3- or 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, paraphenylenediamine, and bis(aminomethyl)naphthalene, but the examples are not limited thereto.

The compound capable of constituting the dicarboxylic acid unit of the polyamide (a2) is an aliphatic dicarboxylic acid having 10 to 12 carbon atoms, and specific examples include sebacic acid, 1,9-nonanedicarboxylic acid, and 1,10-decanedicarboxylic acid. These compounds can be used alone, or in combination of two or more types.

In order to further improve flexibility, the dicarboxylic acid units in the polyamide (a2) comprise aliphatic dicarboxylic acid-derived constituting units having 10 to 12 carbon atoms in an amount of preferably 70 mol % or more, more preferably 80 to 100 mol %, and further preferably 90 to 100 mol %.

The dicarboxylic acid units in the polyamide (a2) may consist of only the aliphatic dicarboxylic acid-derived constituting units having 10 to 12 carbon atoms, but may also comprise constituting units derived from dicarboxylic acids other than the aliphatic dicarboxylic acid having 10 to 12 carbon atoms.

Examples of dicarboxylic acids other than the aliphatic dicarboxylic acid having 10 to 12 carbon atoms, which are comprised in the polyamide (a2), include: aliphatic carboxylic acids having 9 or less and 13 or more carbon atoms, such as succinic acid, glutaric acid, adipic acid, pimelic acid, suberic acid, azelaic acid, 1,11-undecanedicarboxylic acid, 1,12-dodecanedicarboxylic acid, 1,13-tridecanedicarboxylic acid, and 1,14-tetradecanedicarboxylic acid; and aromatic

dicarboxylic acids such as terephthalic acid, isophthalic acid, and 2,6-naphthalenedicarboxylic acid, but the examples are not limited thereto.

From the viewpoint of the improvement of flexibility, the polyamide (a2) is preferably a polyamide comprising, as a main component, aliphatic diamine-derived constituting units having 10 or more carbon atoms, and examples of such a polyamide include polyamide 10,10, polyamide 10,12, polyamide 6,11, and polyamide 6,12. More preferred examples include: polyamide 10,10 comprising, as main components, aliphatic diamine-derived constituting units having 10 carbon atoms and aliphatic dicarboxylic acid-derived constituting units having 10 carbon atoms; polyamide 10,12 comprising, as main components, aliphatic diamine-derived constituting units having 10 carbon atoms and aliphatic dicarboxylic acid-derived constituting units having 12 carbon atoms; and a mixture thereof.

The polyamide (a2) is obtained by polycondensation of diamine components and dicarboxylic acid components. For example, a polyamide resin can be produced by a method which comprises increasing the temperature of salts consisting of diamine components and dicarboxylic acid components in the presence of water under pressurized conditions, and polymerizing them in a melted state, while removing the added water and condensation water. Alternatively, a polyamide resin can also be produced by a method which comprises directly adding diamine components to melted dicarboxylic acid components, and performing polycondensation under an ordinary pressure. In this case, in order to maintain the reaction system in a homogenous solution state, diamine components are continuously added to dicarboxylic acid components, and during this operation, the temperature of the reaction system is increased so that the reaction temperature cannot be lower than the melting point of the generated oligoamide and polyamide, and thus, polycondensation is progressed.

Upon the polycondensation of the polyamide (a2), a small amount of monoamine, monocarboxylic acid, etc. may be added as a molecular weight adjuster.

Moreover, upon the polycondensation of the polyamide (a2), in order to obtain the effect of promoting an amidation reaction or the effect of preventing coloration during the polycondensation, known additives such as a phosphorus atom-containing compound, an alkaline metal compound and an alkaline-earth metal compound may be added.

From the viewpoint of heat resistance and melt moldability, the melting point Tm of the polyamide (a2) is preferably 160°C to 240°C, more preferably 165°C to 230°C, and further preferably 170°C to 220°C.

Among these compounds, as an aliphatic polyamide (a) used in the aliphatic polyamide layer (A), any one or more selected from the group consisting of polyamide 11, polyamide 12, polyamide 10,10, polyamide 10,12, polyamide 6,11 and polyamide 6,12 is preferable, and polyamide 11, polyamide 12 or a mixture thereof is more preferable.

The resin composition that constitutes the aliphatic polyamide layer (A) may comprise various types of commonly used additives, as well as the aliphatic polyamide (a), unless such additives inhibit the purpose and action effects of the present invention. Examples of the additives include an inorganic filler, a fire retardant, a conductive agent, a nucleating agent, an ultraviolet absorber, an antioxidant, a damping agent, an antibacterial agent, an insect repellant, a deodorant, an anti-coloring agent, a thermal stabilizer, a release agent, an antistatic agent, a plasticizer, an impact modifier, a lubricant, a coloring agent, a pigment, a dye, a foaming agent, an antifoaming agent, and a coupling agent, but are not limited thereto. However, these additives are added at a mass ratio of preferably 30% or less, more preferably 25% or less, and further preferably 20% or less, based on the mass of the resin composition constituting the aliphatic polyamide layer (A).

In the multilayer hollow molded body of the present invention, the thickness of the aliphatic polyamide layer (A) is not particularly limited. It is in the range of generally 10 to 2000 μm, more preferably 100 to 1500 μm, and further preferably 200 to 1000 μm.

(2) Barrier layer (B)

The barrier layer (B) used in the present invention consists of a resin composition comprising an ethylene-vinylalcohol copolymer (EVOH) and a semi-aromatic polyamide (b). Since the barrier layer (B) is formed from a resin composition comprising an ethylene-vinylalcohol copolymer (EVOH) and a semi-aromatic polyamide (b), a barrier layer having good barrier properties, burst resistance and heat resistance can be obtained. This barrier layer is also excellent in terms of impact resistance.

(i) Ethylene-vinylalcohol copolymer (EVOH)

The ethylene-vinylalcohol copolymer (EVOH) used in the present invention is a random copolymer of ethylene and vinylalcohol. The ethylene-vinylalcohol copolymer (EVOH) used in the present invention can be obtained, for example, by copolymerizing ethylene, vinyl acetate, and as necessary, small amounts of other copolymer components, and then subjecting the vinyl acetate to saponification to convert the vinyl acetate units to vinylalcohol units.

Examples of such other copolymer components include α-olefins such as propylene, isobutene, α-octene, α-dodecene or α-octadecene, unsaturated carboxylic acid or a salt thereof, a partial alkyl ester, a complete alkyl ester,

nitrile, amide, anhydride, and unsaturated sulfonic acid or a salt thereof.

The ethylene-vinylalcohol copolymer (EVOH) used in the present invention preferably has an ethylene content of 15 to 60 mol % and a saponification degree of vinyl acetate components of 90 mol % or more. The ethylene content is more preferably 20 to 55 mol %, and further preferably 29 to 44 mol %. In addition, the saponification degree of vinyl acetate components is more preferably 95 mol % or more. When the ethylene content and the saponification degree of vinyl acetate components are within the above-described ranges, the ethylene-vinylalcohol copolymer (EVOH) is excellent in terms of barrier properties, oil resistance and chemical resistance.

From the viewpoint of heat resistance and melt moldability, the melting point Tm of the ethylene-vinylalcohol copolymer (EVOH) is preferably 150°C to 200°C, and more preferably 190°C to 160°C.

(ii) Semi-aromatic polyamide (b)

The semi-aromatic polyamide (b) used in the present invention is a resin comprising diamine constituting units and dicarboxylic acid constituting units, wherein either the diamine constituting units or the dicarboxylic acid constituting units comprise more than 50 mol % of aromatic compound-derived constituting units. Examples of such a polyamide include: a polyamide comprising diamine constituting units and dicarboxylic acid constituting units, wherein more than 50 mol % of the diamine constituting units are xylylenediamine-derived constituting units and more than 50 mol % of the dicarboxylic acid constituting units are non-aromatic dicarboxylic acid-derived constituting units; and a polyamide comprising diamine constituting units and dicarboxylic acid constituting units, wherein more than 50 mol % of the diamine constituting units are non-aromatic diamine-derived constituting units and more than 50 mol % of the dicarboxylic acid constituting units are phthalic acid-derived constituting units.

In order to further improve the barrier properties of the multilayer hollow molded body, the semi-aromatic polyamide (b) is preferably a polyamide (b1) comprising diamine constituting units and dicarboxylic acid constituting units, wherein 70 mol % or more of the diamine constituting units are derived from xylylenediamine and 70 mol % or more of the dicarboxylic acid constituting units are derived from α,ω-straight chain aliphatic dicarboxylic acid having 4 to 8 carbon atoms, or a polyamide (b2) comprising diamine constituting units and dicarboxylic acid constituting units, wherein 70 mol % or more of the diamine constituting units are derived from aliphatic diamine having 9 to 12 carbon atoms and 70 mol % or more of the dicarboxylic acid constituting units are derived from terephthalic acid. Hereinafter, the polyamide (b1) and the polyamide (b2) will be described in more detail.

[Polyamide (b1)]

The polyamide (b1) comprises diamine constituting units and dicarboxylic acid constituting units, wherein 70 mol % or more of the diamine constituting units are derived from xylylenediamine and 70 mol % or more of the dicarboxylic acid constituting units are derived from α,ω-straight chain aliphatic dicarboxylic acid having 4 to 8 carbon atoms.

From the viewpoint of appropriately exhibiting barrier properties and thermal properties such as a glass transition temperature or a melting point, the diamine units in the polyamide (b1) comprise 70 mol % or more of, preferably 80 to 100 mol % of, and more preferably 90 to 100 mol % of xylylenediamine-derived constituting units.

The diamine units in the polyamide (b1) may consist of only the xylylenediamine-derived constituting unit, but it may also comprise diamine-derived constituting units other than xylylenediamine.

Examples of the compound constituting diamine units other than xylylenediamine include: aliphatic diamines such as tetramethylenediamine, pentamethylenediamine, 2-methyl-1,5-pentanediamine, hexamethylenediamine, heptamethylenediamine, octamethylenediamine, nonamethylenediamine, decamethylenediamine, dodecamethylenediamine, and 2,2,4- or 2,4,4-trimethylhexamethylenediamine; alicyclic diamines such as 1,3- or 1,4-bis(aminomethyl)cyclohexane, 1,3- or 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, paraphenylenediamine, and bis(aminomethyl)naphthalene, but the examples are not limited thereto.

An example of the compound capable of constituting the aliphatic dicarboxylic acid unit having 4 to 8 carbon atoms in the polyamide (b1) may be α,ω-straight chain aliphatic dicarboxylic acid having 4 to 8 carbon atoms. Examples of the α,ω-straight chain aliphatic dicarboxylic acid having 4 to 8 carbon atoms include succinic acid, glutaric acid, adipic acid, pimelic acid, and suberic acid. Among these compounds, adipic acid is preferable because it provides good barrier properties to a multilayer hollow molded body and it is easily available.

Moreover, from the viewpoint of appropriately exhibiting the barrier properties of a multilayer hollow molded body and thermal properties such as a glass transition temperature or a melting point, the dicarboxylic acid units in the polyamide (b1) comprise 70 mol % or more of, preferably 80 to 100 mol % of, and more preferably 90 to 100 mol % of aliphatic dicarboxylic acid-derived constituting units having 4 to 8 carbon atoms.

The dicarboxylic acid units in the polyamide (b1) may consist of only the α,ω-straight chain aliphatic dicarboxylic acid-derived constituting units having 4 to 8 carbon atoms, but may also comprise constituting units derived from dicarboxylic acids other than the α,ω-straight chain aliphatic dicarboxylic acid having 4 to 8 carbon atoms.

Examples of dicarboxylic acids other than the α,ω-straight chain aliphatic dicarboxylic acid having 4 to 8 carbon atoms, which are comprised in the polyamide (b1), include: aliphatic dicarboxylic acids having 3 or less carbon atoms, such as oxalic acid and malonic acid; aliphatic dicarboxylic acids having 9 or more carbon atoms, such as azelaic acid, sebacic acid, 1,9-nonanedicarboxylic acid, and 1,10-decanedicarboxylic acid; and aromatic dicarboxylic acids such as terephthalic acid, isophthalic acid, and 2,6-naphthalenedicarboxylic acid, but the examples are not limited thereto. These compounds can be used alone, or in combination of two or more types.

In the present invention, among the polyamides (b1), polyxylyleneadipamide, in which all of the diamine units consist of xylylenediamine-derived constituting units and all of the dicarboxylic acid units consist of adipic acid-derived constituting units, is preferable. From the viewpoint of melt moldability, the ratio between m-xylylenediamine-derived constituting units and p-xylylenediamine-derived constituting units in the xylylenediamine-derived constituting units is preferably 100 : 0 to 50 : 50, more preferably 100 : 0 to 60 : 40, and further preferably 100 : 0 to 65 : 35.

From the viewpoint of heat resistance and melt moldability, the melting point Tm of the polyamide (b1) is preferably 200°C to 280°C, and more preferably 220°C to 260°C.

[Polyamide (b2)]

The polyamide (b2) comprises diamine constituting units and dicarboxylic acid constituting units, wherein 70 mol % or more of the diamine constituting units are derived from an aliphatic diamine having 9 to 12 carbon atoms, and 70 mol % or more of the dicarboxylic acid constituting units are derived from terephthalic acid.

The compound capable of constituting the diamine units in the polyamide (b2) is an aliphatic diamine having 9 to 12 carbon atoms. The aliphatic group of the aliphatic diamine having 9 to 12 carbon atoms is a linear or branched divalent aliphatic hydrocarbon group, which may be either a saturated aliphatic group or an unsaturated aliphatic group. In general, it is a linear saturated aliphatic group.

Examples of the aliphatic diamine having 9 to 12 carbon atoms include nonamethylenediamine, 2,2,4- or 2,4,4-trimethylhexamethylenediamine, decamethylenediamine, undecamethylenediamine, and dodecamethylenediamine.

From the viewpoint of maintaining good barrier properties, the diamine units in the polyamide (b2) comprise 70 mol % or more of, preferably 80 to 100 mol % of, and more preferably 90 to 100 mol % of aliphatic diamine-derived constituting units having 9 to 12 carbon atoms. The diamine units in the polyamide (b2) may consist of only the aliphatic diamine-derived constituting units having 9 to 12 carbon atoms, but may also comprise diamine-derived constituting units other than the aliphatic diamine-derived constituting units having 9 to 12 carbon.

Examples of diamine-derived constituting units other than the aliphatic diamine-derived constituting units having 9 to 12 carbon, which are comprised in the polyamide (b2), include: aliphatic diamines having 8 or less carbon atoms, such as tetramethylenediamine, pentamethylenediamine, 2-methyl-1,5-pentanediamine, hexamethylenediamine, heptamethylenediamine, and octamethylenediamine; alicyclic diamines such as 1,3- or 1,4-bis(aminomethyl)cyclohexane, 1,3- or 1,4-diaminocyclohexane, bis(4-aminocyclohexyl)methane, 2,2-bis(4-aminocyclohexyl)propane, bis(aminomethyl)decalin, and bis(aminomethyl)tricyclodecane; and diamines having an aromatic ring, such as bis(4-aminophenyl)ether, paraphenylenediamine, and bis(aminomethyl)naphthalene, but the examples are not limited thereto.

The compound capable of constituting the dicarboxylic acid units in the polyamide (b2) is terephthalic acid, and from the viewpoint of achieving better barrier properties, the polyamide (b2) comprises 70 mol % or more of, preferably 80 to 100 mol % of, and more preferably 90 to 100 mol % of terephthalic acid-derived constituting units. The dicarboxylic acid units in the polyamide (b2) may consist of only the terephthalic acid-derived constituting units, but may also comprise constituting units derived from dicarboxylic acids other than the terephthalic acid.

Examples of dicarboxylic acids other than the terephthalic acid, which are comprised in the polyamide (b2), include: aliphatic carboxylic acids such as succinic acid, glutaric acid, adipic acid, pimelic acid, suberic acid, azelaic acid, sebacic acid, 1,9-nonanedicarboxylic acid, 1,10-decanedicarboxylic acid, 1,11-undecanedicarboxylic acid, 1,12-dodecanedicarboxylic acid, 1,13-tridecanedicarboxylic acid, and 1,14-tetradecanedicarboxylic acid; and aromatic dicarboxylic acids other than terephthalic acid, such as isophthalic acid and 2,6-naphthalenedicarboxylic acid, but the examples are not limited thereto.

The polyamide (b2) is preferably polyamide 9T (PA9T) comprising nonamethylenediamine-derived constituting units and terephthalic acid-derived constituting units as main components.

From the viewpoint of heat resistance and melt moldability, the melting point Tm of the polyamide (b2) is preferably 250°C to 315°C, more preferably 260°C to 300°C, and further preferably 260°C to 280°C.

The polyamide (b1) and the polyamide (b2) are obtained by polycondensation of diamine components and dicarboxylic acid components. The production method thereof is the same as that of the polyamide (a2).

In the present invention, the mass ratio between the ethylene-vinylalcohol copolymer (EVOH) and the semi-aromatic polyamide (b) (EVOH : semi-aromatic polyamide (b)) in the resin composition constituting the barrier layer (B) is in the range of preferably 80 : 20 to 20 : 80, more preferably 70 : 30 to 20 : 80, and further preferably 60 : 40 to 30 :

70. By using the above-described mixing ratio, the burst resistance and heat resistance of the multilayer hollow molded body become more excellent, and also, good impact resistance can be obtained.

The resin composition constituting the barrier layer (B) may comprise various types of commonly used additives, as well as the EVOH and the semi-aromatic polyamide (b), unless the additives inhibit the purpose and action effects of the present invention. Examples of the additives are the same as those exemplified for the aliphatic polyamide layer (A).

In the present invention, the barrier layer (B) has good impact resistance. However, when the impact resistance of the barrier layer (B) is to be further improved, it is preferable to add an impact modifier into the barrier layer (B). The type of such an impact modifier is not particularly limited. Olefinic polymers and elastomers, which are acid-modified with carboxylic acid and/or a derivative thereof, are preferably used because they are excellent in terms of heat resistance and compatibility with polyamide components.

These additives are mixed at a mass ratio of preferably 30% or less, more preferably 25% or less, and further preferably 20% or less, based on the mass of the resin composition constituting the barrier layer (B).

In the multilayer hollow molded body of the present invention, the thickness of the barrier layer (B) is not particularly limited. It is in the range of generally 10 to 1000 μm, more preferably 20 to 750 μm, and further preferably 50 to 500 μm.

The layer structure of the multilayer hollow molded body of the present invention is not particularly limited, as long as the present multilayer hollow molded body has at least one aliphatic polyamide layer (A) and at least one barrier layer (B).

Preferred examples of the layer structure include a two-layer structure consisting of aliphatic polyamide layer (A)/barrier layer (B), a three-layer structure consisting of aliphatic polyamide layer (A)/barrier layer (B)/aliphatic polyamide layer (A), and a five-layer structure consisting of aliphatic polyamide layer (A)/barrier layer (B)/aliphatic polyamide layer (A)/barrier layer (B)/aliphatic polyamide layer (A). In order to more effectively exhibit barrier properties, it is preferable that the barrier layer be disposed on an inner side.

When the multilayer hollow molded body of the present invention has two or more aliphatic polyamide layers (A) and two or more barrier layers (B), individual layers may have a single composition, or may also have each different compositions. For example, the aliphatic polyamide layers (A) can have different compositions by changing the type or mixing ratio of the aliphatic polyamide (a). Moreover, the barrier layers (B) can have different compositions by changing the type of the semi-aromatic polyamide (b) and the mixing ratio between the EVOH and the semi-aromatic polyamide (b).

The multilayer hollow molded body of the present invention may have, as necessary, other layers, as well as the aliphatic polyamide layer (A) and the barrier layer (B), unless such other layers inhibit the purpose and action effects of the present invention.

For instance, for the purpose of enhancing interlayer adhesive strength between the aliphatic polyamide layer (A) and the barrier layer (B), an adhesion layer may also be established. The adhesion layer preferably comprises a thermoplastic resin having adhesiveness. Examples of the thermoplastic resin having adhesiveness include: acid-modified polyolefin resins produced by acid-modifying polyolefinic resins, such as polyethylene or polypropylene, with unsaturated carboxylic acids such as acrylic acid, methacrylic acid, maleic acid, maleic anhydride, fumaric acid, or itaconic acid; and polyester-based thermoplastic elastomers comprising a polyester-based block copolymer as a main component. Furthermore, in order to enhance the adhesiveness of the aliphatic polyamide layer (A) to the barrier layer (B), a layer consisting of a resin composition comprising the aliphatic polyamide (a) and one or more of the ethylene-vinylalcohol copolymer (EVOH) and the semi-aromatic polyamide (b) may be established as an adhesion layer. The thickness of the adhesion layer is not particularly limited. From the viewpoint of ensuring moldability, while exhibiting practical adhesive strength, the thickness of the adhesion layer is in the range of preferably 10 to 200 μm, more preferably 15 to 150 μm, and further preferably 20 to 100 μm.

Further, in order to prevent breakage or pinholes made on the aliphatic polyamide layer (A) or the barrier layer (B), or in order to prevent the direct contact of the layers with content, a protective layer may also be established on the inside or outside of these layers. Examples of the material for the protective layer include: fluorine-based resins such as polyvinylidene fluoride (PVDF), polyvinyl fluoride (PVF), polychlorofluoroethylene (PCTFE), a tetrafluoroethylene/ethylene copolymer (ETFE), an ethylene/chlorotrifluoroethylene copolymer (ECTFE), a tetrafluoroethylene/hexafluoropropylene copolymer (TFE/HFP, FEP), and a tetrafluoroethylene/hexafluoropropylene/vinylidene fluoride copolymer (TFE/HFP/VDF, THV); polyethylenes such as high-density polyethylene; polypropylenes such as a propylene homopolymer, a propylene-ethylene random copolymer, and a propylene-ethylene block copolymer; polyesters such as PET; and the combinations thereof. The thickness of the protective layer is not particularly limited. It is in the range of preferably 10 to 300 μm, more preferably 15 to 200 μm, and further preferably 20 to 100 μm.

Moreover, another barrier layer may also be established in addition to the barrier layer (B). Examples of such another barrier layer include a layer consisting of the ethylene-vinylalcohol copolymer (EVOH) and a layer consisting of the semi-aromatic polyamide (b). The thickness of such another layer is not particularly limited, and it is in the range of preferably 10 to 500 μm, more preferably 20 to 400 μm, and further preferably 50 to 300 μm.

The method for producing the multilayer hollow molded body of the present invention is not particularly limited,

and the present multilayer hollow molded body can be produced by a method that has been conventionally used in the production of multilayer hollow molded bodies. Examples of the method for producing the multilayer hollow molded body of the present invention include: a method which comprises previously melting and blending materials that constitute individual layers, using melt-kneading apparatuses such as extruders, then subjecting the materials to a hollow molded body-molding apparatus, and then melt-extruding the materials from each extruder equipped in the molding apparatus, so as to form a multilayer hollow molded body; a method which comprises quantitatively supplying materials that constitute individual layers into each hollow molded body-molding apparatus, and then melt-extruding the materials from each extruder equipped in the molding apparatus, so as to form a multilayer hollow molded body; and a method which comprises supplying dry blends of materials that constitute individual layers to a hollow molded body-molding apparatus, and then melt-extruding the materials from each extruder equipped in the molding apparatus to form a multilayer hollow molded body.

For example, the multilayer hollow molded body of the present invention can be produced by a method which comprises subjecting materials that constitute individual layers to melt-extrusion using extruders that correspond to the number of the layers or the number of materials, thereby supplying the materials into a die, then making individual circular currents, and then simultaneously extruding them to the inside or outside of the die, so as to produce a multilayer molded body (co-extrusion method), or a method which comprises previously producing a monolayer hollow molded body, and then, successively laminating each resin on the outside of the monolayer hollow molded body, as necessary, using an adhesive, while integrating such resins, so as to produce a multilayer molded body (coating method).

The shape of the multilayer hollow molded body of the present invention is not particularly limited, and various types of shapes, such as a tube, a pipe, a hose, and a connector, can be applied.

When the multilayer hollow molded body of the present invention has a complicated shape, or when heat bending processing is performed after completion of the molding of a molded body, in order to eliminate residual strain from the molded product, after a multilayer hollow molded body has been formed, the multilayer hollow molded body is subjected to a heat treatment at a temperature that is lower than the lowest melting point among the melting points of individual resins constituting the multilayer hollow molded body, so as to obtain a molded product of interest.

The multilayer hollow molded body of the present invention may have a waveform region in at least a part thereof. The term "waveform region" is used herein to mean a region formed to have a waveform shape, a bellows shape, an accordion shape, or a corrugate shape. A hollow molded body having such a waveform region can be easily formed by molding a straight tube-shaped hollow molded body, and then subjecting the molded body to mold forming, so as to form a predetermined waveform shape. Moreover, the multilayer hollow molded body of the present invention can also be molded, for example, by adding a necessary component such as a connector to the molded body, or the multilayer hollow molded body of the present invention can also be molded into a shape such as an L-shape or a U-shape by performing bending processing.

The outside diameter and thickness of the multilayer hollow molded body of the present invention are not particularly limited, and they may be determined, as appropriate, depending on intended use. In general, the outside diameter is in the range of preferably 3 to 100 mm, more preferably 5 to 50 mm, and further preferably 7 to 20 mm. In addition, the thickness is generally in the range of preferably 0.1 to 10 mm, more preferably 0.3 to 5 mm, and further preferably 0.5 to 3 mm.

The multilayer hollow molded body of the present invention can be used as a pipe, a hose, a tube, a connector, or the like for various types of intended uses. According to a preferred aspect of the present invention, since the multilayer hollow molded body of the present invention is excellent in terms of barrier properties, burst resistance, heat resistance, and impact resistance, it can be preferably used as a fuel transportation piping material for transporting high-temperature liquid fuel, such as petroleum, alcohol-containing gasoline, methanol, ethanol, light oil, kerosene, or heavy oil, for example, as a fuel pipe, a fuel hose, a fuel tube, a connector capable of connecting them with one another, etc.

## EXAMPLES

Hereinafter, the present invention will be described in more detail in the following examples. However, these examples are not intended to limit the scope of the present invention. It is to be noted that various types of physical properties described in the Examples or the like were evaluated by the following methods.

(1) Burst resistance

With regard to individual tubes obtained in the following examples and comparative Examples, 23°C or 80°C water was filled into each tube under 23°C or 80°C atmosphere, the pressure was then increased at a pressure increasing rate of 7 MPa/min, and thereafter, the pressure upon generation of a burst in the tube was measured in accordance with SAE J 2260. The tube, in which the pressure was 30 MPa or more at a temperature of 23°C, or the pressure was 10 MPa or more at a temperature of 80°C, was determined to be satisfactory. It is to be noted that the heat resistance of

a multilayer hollow molded body can be evaluated based on the burst resistance at 80°C.

(2) CE10 barrier properties (alcohol-containing gasoline permeation preventing property)

With regard to individual tubes obtained in the following examples and comparative Examples, one end of the tube that had been cut into a size of 200 mm was hermetically sealed, and alcohol/gasoline prepared by mixing Fuel C (isooctane/toluene = 50/50 volume ratio) and ethanol at volume ratio of 90/10 was then added into the tube. After that, the other end was also hermetically sealed. Thereafter, the entire mass was measured, and the test tube was placed in an oven at 40°C and was then left at rest for 24 hours. Thereafter, the test tube was removed from the oven, and a change in the mass was then measured. According to the following formula, the permeability of the alcohol-containing gasoline per 1$m^2$ was evaluated. A permeability of 1 g/$m^2$_day or less was determined to be satisfactory.

Formula: Permeability of alcohol-containing gasoline (g/m2_day) = change in weight for 24 hours (g) / (inside diameter of tube (m) x circular constant circumference ratio $\pi$ x tube length (m))

(3) Impact resistance

The tube was placed at rest on a stainless steel-made workbench, and thereafter, from a height of 30 cm, an iron ball with a diameter of 10 cm and a weight of 900 g was then vertically dropped onto the tube. The test was performed on 10 sites of each of the tubes obtained in the following examples and comparative examples. After completion of the test, the tube was cut and opened at a position with an angle of 90° in the circumferential direction to the site of the tube, to which shock had been given, and the shock-given sites on the inner layer side and the outer layer side were observed by visual inspection. With regard to the 10 shock-given sites, a tube, in which no cracks were generated in all layers in all of the sites, was determined to be satisfactory (A), and a tube, in which cracks were generated in any one layer in any one site, was determined to be unsatisfactory (B).

(4) Relative viscosity

0.2 g of the polyamide (b) was precisely weighed, and it was then completely dissolved in 20 ml of 96-mass-% sulfuric acid by stirring at 20°C to 30°C, so as to prepare a solution. Thereafter, 5 ml of the thus prepared solution was promptly placed in a Cannon-Fenske viscometer, and it was then preserved in a 25°C thermostatic bath for 10 minutes. After that, a fall velocity (t) was measured. Likewise, the fall velocity ($t_0$) of 96-mass-% sulfuric acid was also measured.

Using the measured t and $t_0$ values, the relative viscosity of the polyamide (b) was calculated according to the following formula.

$$\text{Relative viscosity of polyamide (b)} = t/t_0$$

(5) Melting point

The melting point was measured by DSC (differential scanning calorimetry) using a differential scanning calorimeter [manufactured by Shimadzu Corporation, trade name: DSC-60], at a temperature increase rate of 10°C/min, under a nitrogen current.

(6) Thickness

The thickness of each layer of the multilayer hollow molded body and the thickness of the hollow molded body were obtained by cutting the tube vertically to the flow direction during the molding, then observing it under a digital microscope at a magnification of 100 times, and then measuring the thickness thereof.

Synthesis Example 1

Synthesis of polyamide resin (b1-1)

730.8 g of adipic acid, 0.6322 g of sodium hypophosphite monohydrate, and 0.4404 g of sodium acetate were added to a reactor with a volume of approximately 3 L, which was equipped with a stirrer, a nitrogen gas introduction port and a condensation water discharge port. The inside of the reactor was sufficiently substituted with nitrogen, and while nitrogen gas was supplied at a rate of 20 ml/min, the substances were melted at 170°C. While the temperature was gradually increased to 250°C, 681.0 g of m-xylylenediamine (MXDA) (manufactured by MITSUBISHI GAS CHEMICAL COMPANY, INC.) was added dropwise to the reaction mixture, and polymerization was then performed for approximately 2 hours, so as to obtain a semi-aromatic polyamide resin (b1-1). The relative viscosity (ηr) of the obtained semi-aromatic polyamide resin (b1-1) was found to be 2.1, and the melting point (Tm) was found to be 237.4°C.

Synthesis Example 2

Synthesis of polyamide resin (b1-2)

730.8 g of adipic acid, 0.6322 g of sodium hypophosphite monohydrate, and 0.4404 g of sodium acetate were added to a reactor with a volume of approximately 3 L, which was equipped with a stirrer, a nitrogen gas introduction port and a condensation water discharge port. The inside of the reactor was sufficiently substituted with nitrogen, and while nitrogen gas was supplied at a rate of 20 ml/min, the substances were melted at 170°C. While the temperature was gradually increased to 275°C, a mixed solution of 476.70 g of m-xylylenediamine (MXDA) (manufactured by MITSUBISHI GAS CHEMICAL COMPANY, INC.) and 204.30 g of p-xylylenediamine (PXDA) (manufactured by MITSUBISHI GAS CHEMICAL COMPANY, INC.) (molar ratio (MXDA/PXDA = 70/30)) was added dropwise to the reaction mixture, and polymerization was then performed for approximately 2 hours, so as to obtain a semi-aromatic polyamide resin (b1-2). The relative viscosity (ηr) of the obtained semi-aromatic polyamide resin (b1-2) was found to be 2.1, and the melting point (Tm) was found to be 257.0°C.

Example 1

A resin composition prepared by dry-blending 80 parts by weight of the semi-aromatic polyamide resin (b1-1) obtained in Synthesis Example 1 with 20 parts by weight of EVOH (manufactured by KURARAY CO., LTD., brand name: Eval (registered trademark) F101B), which was to be used to form a barrier layer (B), and nylon 11 to be used to form an aliphatic polyamide layer (A), were each added into a single screw extruder. Using a multilayer tube molding machine consisting of two single screw extruders and a flow channel for forming a multilayer structure consisting of two types of two layers, a multilayer tube having an outside diameter of 8 mm and a thickness of 1 mm was obtained (outer layer: aliphatic polyamide layer (A), and inner layer: barrier layer (B)). The thickness of the aliphatic polyamide layer (A) was 800 μm, and the thickness of the barrier layer (B) was 200 μm.

Examples 2, 3 and 4

A multilayer tube having an outside diameter of 8 mm and a thickness of 1 mm was obtained in the same manner as that of Example 1, with the exception that the mixed amounts of the semi-aromatic polyamide (b1-1) and the EVOH were changed to those shown in Table 1. With regard to all of the multilayer tubes of Examples 2, 3 and 4, the thickness of the aliphatic polyamide layer (A) was 800 μm, and the thickness of the barrier layer (B) was 200 μm.

Examples 5 and 6

A multilayer tube having an outside diameter of 8 mm and a thickness of 1 mm was obtained in the same manner as that of Example 1, with the exceptions that the semi-aromatic polyamide (b1-2) obtained in Synthesis Example 2 was used instead of the semi-aromatic polyamide (b1-1), and that the mixed amounts of the semi-aromatic polyamide (b1-2) and the EVOH were changed to those shown in Table 1. With regard to both of the multilayer tubes of Examples 5 and 6, the thickness of the aliphatic polyamide layer (A) was 800 μm, and the thickness of the barrier layer (B) was 200 μm.

Comparative Example 1

EVOH (manufactured by KURARAY CO., LTD., brand name: Eval (registered trademark) F101B), which was

used to form a barrier layer (B), and nylon 11 used to form an aliphatic polyamide layer (A), were each added into a single screw extruder. Using a multilayer tube molding machine consisting of two single screw extruders and a flow channel for forming a multilayer structure consisting of two types of two layers, a multilayer tube having an outside diameter of 8 mm and a thickness of 1 mm was obtained. The thickness of the aliphatic polyamide layer (A) was 800 μm, and the thickness of the barrier layer (B) was 200 μm.

Comparative Example 2

A multilayer tube having an outside diameter of 8 mm and a thickness of 1 mm was obtained in the same manner as that of Comparative Example 1, with the exception that the semi-aromatic polyamide (bl-1) obtained in Synthesis Example 1 was used, instead of the EVOH used in Comparative Example 1. The thickness of the aliphatic polyamide layer (A) was 800 μm, and the thickness of the barrier layer (B) was 200 μm.

Using the multilayer tubes obtained in Examples 1 to 6 and Comparative Examples 1 and 2, burst resistance (including heat resistance), CE10 barrier properties, and impact resistance were evaluated. The results are shown in Table 1.

[Table 1]

Table 1

| | | | | Example | | | | | | Comparative Example | |
|---|---|---|---|---|---|---|---|---|---|---|---|
| | | | | 1 | 2 | 3 | 4 | 5 | 6 | 1 | 2 |
| Aliphatic polyamide layer (A) | | | | PA11 | PA11 | PA11 | PA11 | PA11 | PA11 | PA11 | PA11 |
| Barrier layer (B) | Mixed amount of EVOH (part by mass) | | | 80 | 60 | 40 | 20 | 80 | 60 | 100 | 0 |
| | Semi-aromatic polyamide (b) | Diamine constituting unit | Xylylenediamine | 100 | 100 | 100 | 100 | 100 | 100 | - | 100 |
| | | | MXDA:PXDA | 100:0 | 100:0 | 100:0 | 100:0 | 70:30 | 70:30 | - | 100:0 |
| | | Dicarboxylic acid constituting unit | Adipic acid | 100 | 100 | 100 | 100 | 100 | 100 | - | 100 |
| | | Mixed amount (part by mass) | | 20 | 40 | 60 | 80 | 20 | 40 | 0 | 100 |
| Burst resistance evaluation (23°C) | | | (MPa) | 36 | 41 | 47 | 52 | 35 | 39 | 29 | 60 |
| Burst resistance evaluation (80°C) | | | (MPa) | 15 | 19 | 24 | 28 | 17 | 22 | 9 | 28 |
| impact resistance evaluation | | | | A | A | A | A | A | A | A | B |
| Evaluation of CE10 barrier properties (alcohol-containing gasoline permeation preventing property) CE10 permeability (g/m2_day) | | | | 0.5 | 0.5 | 0.5 | 0.6 | 0.5 | 0.5 | 0.5 | 0.6 |

As shown in Table 1, the multilayer hollow molded body of the present invention is found to be excellent in terms of barrier properties, burst resistance, heat resistance, and impact resistance. On the other hand, when only the EVOH was used as a barrier layer, burst resistance and heat resistance became poor (Comparative Example 1). When only the semi-aromatic polyamide (b) was used as a barrier layer, impact resistance became poor although burst resistance and heat resistance were good (Comparative Example 2).

INDUSTRIAL APPLICABILITY

Since the multilayer hollow molded body of the present invention is excellent in terms of barrier properties, burst resistance, heat resistance, and impact resistance, it is preferably used as a fuel transportation piping material, a fuel storage container, or the like. In particular, the present multilayer hollow molded body is preferably used as a material for a fuel tube, a fuel pipe, a fuel hose, or a connector.

## Claims

1. A multilayer hollow molded body having at least one aliphatic polyamide layer (A) and at least one barrier layer (B), wherein
the aliphatic polyamide layer (A) consists of a resin composition comprising an aliphatic polyamide (a) as a main component, and
the barrier layer (B) consists of a resin composition comprising an ethylene-vinylalcohol copolymer (EVOH) and a semi-aromatic polyamide (b), wherein the mass ratio between the ethylene-vinylalcohol copolymer (EVOH) and the semi-aromatic polyamide (b) (EVOH : semi-aromatic polyamide (b)) in the resin composition constituting the barrier layer (B) is in the range of 60 : 40 to 30 : 70.

2. The multilayer hollow molded body according to claim 1, wherein the semi-aromatic polyamide (b) is a polyamide comprising diamine constituting units containing 70 mol % or more of diamine constituting units derived from xylylenediamine, and dicarboxylic acid units containing 70 mol % or more of dicarboxylic acid units derived from $\alpha,\omega$-straight chain aliphatic dicarboxylic acid having 4 to 8 carbon atoms.

3. The multilayer hollow molded body according to claim 1 or 2, wherein the semi-aromatic polyamide (b) is polyxylyleneadipamide.

4. The multilayer hollow molded body according to any one of claims 1 to 3, wherein the aliphatic polyamide (a) is at least one selected from the group consisting of: a polyamide (a1) comprising at least one of, lactam-derived constituting units having 10 to 12 carbon atoms and aminocarboxylic acid-derived constituting units having 10 to 12 carbon atoms; and a polyamide (a2) comprising aliphatic diamine-derived constituting units having 6 to 12 carbon atoms and aliphatic dicarboxylic acid-derived constituting units having 10 to 12 carbon atoms.

5. The multilayer hollow molded body according to any one of claims 1 to 4, wherein the aliphatic polyamide (a) is at least one selected from the group consisting of polyamide 11, polyamide 12, polyamide 10,10, polyamide 10,12, polyamide 6,11 and polyamide 6,12.

6. Use of the multilayer hollow molded body according to any one of claims 1 to 5, as a fuel tube, a fuel pipe, a fuel hose, or a connector.

## Patentansprüche

1. Ein mehrschichtiger hohler Formkörper mit mindestens einer aliphatischen Polyamidschicht (A) und mindestens einer Sperrschicht (B), wobei
die aliphatische Polyamidschicht (A) aus einer Harzzusammensetzung besteht, die ein aliphatisches Polyamid (a) als ein Hauptbestandteil umfasst, und
die Sperrschicht (B) aus einer Harzzusammensetzung besteht, die ein Ethylen-Vinylalkohol-Copolymer (EVOH) und ein teilweise aromatisches Polyamid (b) umfasst, wobei das Massenverhältnis zwischen dem Ethylen-Vinylalkohol-Copolymer (EVOH) und dem teilweise aromatischen Polyamid (b) (EVOH: teilweise aromatisches Polyamid (b)) in der Harzzusammensetzung, die die Sperrschicht (B) bildet, im Bereich von 60 : 40 bis 30 : 70 liegt.

2. Der mehrschichtige hohle Formkörper gemäß Anspruch 1, wobei das teilweise aromatische Polyamid (b) ein Polyamid ist, das Diamin-konstituierende Einheiten, die 70 Mol-% oder mehr an Diamin-konstituierenden Einheiten enthalten, welche von Xylylendiamin abgeleitet sind, und Dicarbonsäureeinheiten, die 70 Mol-% oder mehr an Dicarbonsäureeinheiten enthalten, welche von geradkettiger aliphatischer $\alpha,\omega$-Dicarbonsäure, die 4 bis 8 Kohlenstoffatomen enthält, abgeleitet sind, umfasst.

3. Der mehrschichtige hohle Formkörper gemäß Anspruch 1 oder 2, wobei das teilweise aromatische Polyamid (b) Polyxylylenadipamid ist.

4. Der mehrschichtige hohle Formkörper gemäß einem der Ansprüche 1 bis 3, wobei das aliphatische Polyamid (a) mindestens eines ist, das ausgewählt ist aus der Gruppe bestehend aus: einem Polyamid (a1), umfassend mindestens eine von von Lactam abgeleiteten konstituierenden Einheiten, die 10 bis 12 Kohlenstoffatome enthalten, und von Aminocarbonsäure abgeleiteten konstituierenden Einheiten, die 10 bis 12 Kohlenstoffatome enthalten; und einem Polyamid (a2), umfassend von aliphatischem Diamin abgeleitete konstituierende Einheiten, die 6 bis 12 Kohlenstoffatome enthalten, und von aliphatischer Dicarbonsäure abgeleitete konstituierende Einheiten, die 10 bis 12 Kohlenstoffatome enthalten.

5. Der mehrschichtige hohle Formkörper gemäß einem der Ansprüche 1 bis 4, wobei das aliphatische Polyamid (a) mindestens eines ist, das ausgewählt ist aus der Gruppe bestehend aus
Polyamid 11, Polyamid 12, Polyamide 10,10, Polyamide 10,12, Polyamid 6,11 und Polyamid 6,12.

6. Verwendung des mehrschichtigen hohlen Formkörpers gemäß einem der Ansprüche 1 bis 5 als Kraftstoffrohr, Kraftstoffleitung, Kraftstoffschlauch oder ein Verbindungsstück.

**Revendications**

1. Corps moulé creux multicouche ayant au moins une couche de polyamide aliphatique (A) et au moins une couche de barrière (B), dans lequel
la couche de polyamide aliphatique (A) consiste en une composition de résine comprenant un polyamide aliphatique (a) en tant que composant principal, et
la couche de barrière (B) consiste en une composition de résine comprenant un copolymère d'éthylène-alcool vinylique (EVOH) et un polyamide semi-aromatique (b), dans laquelle le rapport en masse entre le copolymère d'éthylène-alcool vinylique (EVOH) et le polyamide semi-aromatique (b) (EVOH : polyamide semi-aromatique (b)) dans la composition de résine constituant la couche de barrière (B) est situé dans la plage allant de 60/40 à 30/70.

2. Corps moulé creux multicouche selon la revendication 1, dans lequel le polyamide semi-aromatique (b) est un polyamide comprenant des motifs constitutifs diamine contenant 70 % en moles ou plus de motifs constitutifs diamine dérivés de xylylènediamine, et des motifs acide dicarboxylique contenant 70 % en moles ou plus de motifs acide dicarboxylique dérivés d'acide dicarboxylique aliphatique à chaîne droite $\alpha,\omega$ ayant 4 à 8 atomes de carbone.

3. Corps moulé creux multicouche selon la revendication 1 ou 2, dans lequel le polyamide semi-aromatique (b) est le polyxylylèneadipamide.

4. Corps moulé creux multicouche selon l'une quelconque des revendications 1 à 3, dans lequel le polyamide aliphatique (a) est au moins l'un choisi dans le groupe constitué par : un polyamide (a1) comprenant au moins l'un parmi des motifs constitutifs dérivés de lactame ayant 10 à 12 atomes de carbone et des motifs constitutifs dérivés d'acide aminocarboxylique ayant 10 à 12 atomes de carbone ; et un polyamide (a2) comprenant des motifs constitutifs dérivés de diamine aliphatique ayant 6 à 12 atomes de carbone et des motifs constitutifs dérivés d'acide dicarboxylique aliphatique ayant 10 à 12 atomes de carbone.

5. Corps moulé creux multicouche selon l'une quelconque des revendications 1 à 4, dans lequel le polyamide aliphatique (a) est au moins l'un choisi dans le groupe constitué par le polyamide 11, le polyamide 12, le polyamide 10,10, le polyamide 10,12, le polyamide 6,11 et le polyamide 6,12.

6. Utilisation du corps moulé creux multicouche selon l'une quelconque des revendications 1 à 5 en tant que tube à combustible, tuyau à combustible, durite à combustible, ou connecteur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003239819 A
- JP 2006341615 A
- FR 2928152 A1